# EUROPÄISCHE PATENTSCHRIFT

(11) **EP 3 652 420 B1**
(45) Veröffentlichungstag und Bekanntmachung des Hinweises auf die Patenterteilung: **02.12.2020**
(21) Anmeldenummer: 18739514.0
(22) Anmeldetag: 09.07.2018
(51) Int. Cl.: F01N 3/021, F01N 3/10, F01N 3/20, F01N 3/22, F01N 3/30, F01N 3/34, F01N 5/04, F01N 9/00, F01N 13/00

(54) **SYSTEM UND VERFAHREN ZUR ABGASNACHBEHANDLUNG EINES VERBRENNUNGSMOTORS**
SYSTEM AND METHOD FOR AFTERTREATMENT OF EXHAUST GAS OF AN INTERNAL COMBUSTION ENGINE
SYSTÈME ET MÉTHODE POUR POST-TRAITEMENT DES GAZ D'ÉCHAPPEMENT D'UN MOTEUR À COMBUSTION INTERNE

(30) Priorität: 10.07.2017 DE 102017115408
(43) Veröffentlichungstag der Anmeldung: 20.05.2020
(73) Patentinhaber: Volkswagen Aktiengesellschaft, 38440 Wolfsburg (DE)
(72) Erfinder: PAUKNER, Stefan, 38442 Wolfsburg (DE); BARON VON CEUMERN-LINDENSTJERNA, Falk-Christian, 38124 Braunschweig (DE)
(74) Vertreter: Gulde & Partner
(86) Internationale Anmeldenummer: PCT/EP2018/068509
(87) Internationale Veröffentlichungsnummer: WO 2019/011842

(56) Entgegenhaltungen:
- CN-A- 106 762 040
- CN-A- 106 762 040
- DE-A1-102011 017 486
- DE-A1-102011 017 486
- FR-A1- 2 945 575
- FR-A1- 2 945 575
- JP-A- 2010 048 131
- JP-A- 2010 048 131
- US-A1- 2011 073 088
- US-A1- 2011 073 088
- US-A1- 2013 192 202
- US-A1- 2013 192 202
- US-A1- 2013 255 227
- US-A1- 2013 255 227
- US-B2- 8 899 027
- US-B2- 8 899 027

## Beschreibung

Die Erfindung betrifft ein Abgasnachbehandlungssystem für einen Verbrennungsmotor sowie ein Verfahren zur Abgasnachbehandlung eines Verbrennungsmotors gemäß den Oberbegriffen der unabhängigen Patentansprüche.

Die kontinuierliche Verschärfung der Abgasgesetzgebung stellt hohe Anforderungen an die Fahrzeughersteller, welche durch entsprechende Maßnahmen zur Reduktion der motorischen Rohemissionen und durch eine entsprechende Abgasnachbehandlung gelöst werden. Mit Einführung der Gesetzgebungsstufe EU6 wird für Ottomotoren ein Grenzwert für eine Partikelanzahl vorgeschrieben, der in vielen Fällen den Einsatz eines Ottopartikelfilters notwendig macht. Solche Rußpartikel entstehen besonders nach einem Kaltstart des Verbrennungsmotors aufgrund einer unvollständigen Verbrennung in Kombination mit einem überstöchiometrischen Verbrennungsluftverhältnis sowie kalter Zylinderwände während des Kaltstarts. Die Kaltstartphase ist somit maßgeblich für die Einhaltung der gesetzlich vorgeschriebenen Partikelgrenzwerte. Im Fahrbetrieb wird ein solcher Ottopartikelfilter weiter mit Ruß beladen. Damit der Abgasgegendruck nicht zu stark ansteigt, muss dieser Ottopartikelfilter kontinuierlich oder periodisch regeneriert werden. Der Anstieg des Abgasgegendrucks kann zu einem Mehrverbrauch des Verbrennungsmotors, Leistungsverlust und einer Beeinträchtigung der Laufruhe bis hin zu Zündaussetzern führen. Um eine thermische Oxidation des im Ottopartikelfilter zurückgehaltenen Rußes mit Sauerstoff durchzuführen, ist ein hinreichend hohes Temperaturniveau in Verbindung mit gleichzeitig vorhandenem Sauerstoff in der Abgasanlage des Ottomotors notwendig. Da moderne Ottomotoren normalerweise ohne Sauerstoffüberschuss mit einem stöchiometrischen Verbrennungsluftverhältnis (λ=1) betrieben werden, sind dazu zusätzliche Maßnahmen erforderlich. Dazu kommen als Maßnahmen beispielsweise eine Temperaturerhöhung durch eine Zündwinkelverstellung, eine zeitweise Magerverstellung des Ottomotors, das Einblasen von Sekundärluft in die Abgasanlage oder eine Kombination dieser Maßnahmen infrage. Bevorzugt wird bislang eine Zündwinkelverstellung in Richtung spät in Kombination mit einer Magerverstellung des Ottomotors angewandt, da dieses Verfahren ohne zusätzliche Bauteile auskommt und in den meisten Betriebspunkten des Ottomotors eine ausreichende Sauerstoffmenge liefern kann. Aufgrund der guten Wirkungsgrade beim Ottomotor ist eine Regeneration eines Partikelfilters in Unterbodenposition in bestimmten Betriebssituationen unmöglich, sodass die Regeneration eines Partikelfilters in Unterbodenlage spezieller Fahrzyklen bedarf. Eine motornahe Positionierung des Partikelfilters ist günstig, da dadurch höhere Abgastemperaturen am Partikelfilter vorliegen und das Aufheizen auf eine Regenerationstemperatur erleichtert wird. Ein weiteres Problem bei Drei-Wege-Katalysatoren mit einer drei-Wege-katalytisch wirksamen Beschichtung, sogenannten Vier-Wege-Katalysatoren, ist die Tatsache, dass die Beschichtung starke Alterungserscheinungen aufweisen kann, sodass für die Konvertierung der gasförmigen Schadstoffe ein zusätzlicher Drei-Wege-Katalysator in motornaher Lage erforderlich sein kann.

Aus der DE 10 2008 036 127 A1 ist ein Verfahren zur Abgasnachbehandlung eines Verbrennungsmotors bekannt, in dessen Abgaskanal ein Partikelfilter und ein Drei-Wege-Katalysator angeordnet sind. Dabei ist der Partikelfilter als erste Komponente der Abgasnachbehandlung stromabwärts eines Auslasses des Verbrennungsmotors angeordnet. Stromabwärts des Partikelfilters ist ein Drei-Wege-Katalysator angeordnet. Dabei wird der Sauerstoffgehalt im Abgas zur Regeneration des Partikelfilters über eine Lambdaregelung des Drei-Wege-Katalysators erhöht.

Die DE 10 2010 046 747 A1 offenbart ein Abgasnachbehandlungssystem für einen Ottomotor sowie ein Verfahren zur Abgasnachbehandlung. Dabei ist stromabwärts eines Drei-Wege-Katalysators ein Partikelfilter angeordnet, wobei zur Regeneration der im Partikelfilter zurückgehaltenen Rußpartikel ein Sekundärluftsystem bereitgestellt werden kann, welches stromabwärts des Drei-Wege-Katalysators und stromaufwärts des Partikelfilters Frischluft in die Abgasanlage einbläst.

Ferner ist aus der DE 10 2012 204 779 A1 ein Abgasnachbehandlungssystem für einen Verbrennungsmotor bekannt, bei dem in einer Abgasanlage ein elektrisch beheizbarer Drei-Wege-Katalysator und stromab des elektrisch beheizbaren Drei-Wege-Katalysators ein weiterer Drei-Wege-Katalysator angeordnet sind. Dabei kann zur Emissionsminderung Sekundärluft in die Abgasanlage eingebracht werden.

Aus der FR 2 945 575 A1 ist ein Abgasnachbehandlungssystem für einen Verbrennungsmotor mit einer Abgasanlage bekannt, welche mit einem Auslass des Verbrennungsmotors verbindbar ist. Dabei umfasst die Abgasanlage einen Abgaskanal, in dem in Strömungsrichtung eines Abgases des Verbrennungsmotors durch den Abgaskanal als erste emissionsmindernde Komponente motornah ein Partikelfilter und stromabwärts des Partikelfilters ebenfalls in einer motornahen Position ein Drei-Wege-Katalysator angeordnet ist.

Die US 2013/255227 A1 offenbart ein Steuersystem für einen Verbrennungsmotor, in dessen Abgasanlage ein elektrisch beheizbarer Drei-Wege-Katalysator und stromabwärts des elektrisch beheizbaren Drei-Wege-Katalysators ein weiterer Katalysator angeordnet sind.

Aus der US 2011/073088 A1 ist ein Verbrennungsmotor mit einem Abgasnachbehandlungssystem bekannt, wobei stromabwärts einer Turbine eines Abgasturboladers ein Partikelfilter und stromabwärts des Partikelfilters ein Drei-Wege-Katalysator angeordnet sind.

Die DE 10 2011 017486 A1 offenbart ein Betriebsverfahren für einen Kraftfahrzeug-Dieselmotor mit einer Abgasreinigungsanlage, wobei der Verbrennungsmotor mit einem nahezu stöchiometrischen Verbrennungsluftverhältnis betrieben wird, solange ein SCR-Katalysator noch nicht seine Betriebstemperatur erreicht hat.

CN 106 762 040 A zeigt eine Abgasnachbehandlungsanlage für einen Verbrennungsmotor mit einem motornahen Partikelfilter und zwei stromabwärts des Partikelfilters angeordnete Katalysatoren.

Aus der US 8 899 027 B2 ist ein Verfahren zur Regeneration eines Partikelfilters in der Abgasanlage eines Hybridfahrzeugs bekannt. Dabei wird in einem Betriebsmodus, in dem in den Brennräumen des Verbrennungsmotors kein Kraftstoff verbrannt wird der Partikelfilter mittels eines elektrisch beheizbaren Katalysators aufgeheizt, wobei der Elektromotor den Verbrennungsmotor schleppt und somit die zur Oxidation des Rußes notwendige Frischluft in die Abgasanlage fördert.

Die JP 2010 048131 A offenbart ein Kraftfahrzeug mit einem Verbrennungsmotor, wobei in der Abgasanlage des Verbrennungsmotors ein motornaher Partikelfilter und ein Drei-Wege-Katalysator in Unterbodenlage des Kraftfahrzeugs angeordnet sind.

Die US 2013/192202 A1 offenbart ein Verfahren zur passiven Regeneration eines Partikelfilters in der Abgasanlage eines Verbrennungsmotors. Dabei wird während einer Schubphase des Kraftfahrzeuges die Kraftstoffeinspritzung in Richtung mager verstellt und somit Sauerstoff für die Regeneration des Partikelfilters zur Verfügung gestellt.

Aufgabe der Erfindung ist es, in allen Fahrzyklen das Erreichen einer Regenerationstemperatur des Partikelfilters sicherzustellen, das Alterungsverhalten des Abgasnachbehandlungssystems zu verbessern und die aus dem Stand der Technik bekannten Nachteile zu überwinden.

Erfindungsgemäß wird diese Aufgabe durch ein Abgasnachbehandlungssystem für einen Verbrennungsmotor mit einer Abgasanlage gelöst, welche mit einem Auslass des Verbrennungsmotors verbunden ist, wobei die Abgasanlage einen Abgaskanal umfasst, in dem in Strömungsrichtung eines Abgases des Verbrennungsmotors durch den Abgaskanal als erste emissionsmindernde Komponente motornah ein Partikelfilter, stromabwärts des Partikelfilters ebenfalls in einer motornahen Position ein elektrisch beheizbarer Drei-Wege-Katalysator und stromabwärts des elektrisch beheizbaren Katalysators ein weiterer Drei-Wege-Katalysator angeordnet sind. Unter einer motornahen Anordnung des Partikelfilters und des elektrisch beheizbaren Drei-Wege-Katalysators ist in diesem Zusammenhang eine Anordnung der Abgasnachbehandlungskomponenten mit einer Abgaslauflänge von weniger als 80 cm, insbesondere von weniger als 50 cm, besonders bevorzugt von weniger als 35 cm ab einem Auslass des Verbrennungsmotors zu verstehen. Dadurch sind eine beschleunigte Aufheizung des Partikelfilters und des elektrisch beheizbaren Drei-Wege-Katalysators, insbesondere nach einem Kaltstart des Verbrennungsmotors, möglich. Durch die motornahe Position des Partikelfilters geht weniger Abwärme über die Wände des Abgaskanals verloren, sodass es im Vergleich zu einem Partikelfilter in Unterbodenposition des Verbrennungsmotors leichter ist, am Partikelfilter eine zur Regeneration des Partikelfilters notwendige Oxidationstemperatur von im Partikelfilter zurückgehaltenen Rußpartikeln zu erreichen.

Durch die in den abhängigen Ansprüchen aufgeführten Merkmale sind vorteilhafte Verbesserungen und Weiterbildungen des erfindungsgemäßen Abgasnachbehandlungssystems für einen Verbrennungsmotor möglich.

Gemäß einer bevorzugten und vorteilhaften Ausführungsform der Erfindung ist vorgesehen, dass der Verbrennungsmotor ein Sekundärluftsystem zur Einbringung von Sekundärluft in den Abgaskanal aufweist, wobei eine Einleitstelle des Sekundärluftsystems an dem Auslass des Verbrennungsmotors oder stromabwärts des Auslasses und stromaufwärts des Partikelfilters angeordnet ist. Dabei wird Sekundärluft in die heißen Auslasskanäle des Verbrennungsmotors eingeblasen, wobei die unverbrannten Abgaskomponenten mit der Sekundärluft noch in dem Auslasskanal exotherm reagieren und somit für ein Aufheizen des Abgases sorgen. Somit kann die Zeit, in welcher der elektrisch beheizbare Drei-Wege-Katalysator seine Light-Off-Temperatur erreicht hat, weiter verkürzt werden. Ferner kann das Sekundärluftsystem genutzt werden, um eine Regeneration des Partikelfilters durchzuführen und den für die Regeneration notwendigen Sauerstoff in den Abgaskanal stromaufwärts des Partikelfilters einzubringen. Dadurch kann der Betriebszustand des Verbrennungsmotors bei einer Regeneration des Partikelfilters entsprechend angepasst werden, sodass der Verbrennungsmotor nicht mit einem überstöchiometrischen Verbrennungsluftverhältnis betrieben werden muss, um eine Regeneration des Partikelfilters zu ermöglichen.

In einer vorteilhaften Verbesserung der Erfindung ist vorgesehen, dass der elektrisch beheizbare Drei-Wege-Katalysator ein elektrisches Heizelement, insbesondere eine elektrische Heizscheibe, und eine metallische Trägerstruktur aufweist. Ein elektrisches Heizelement kann auf einfache Art und Weise mittels eines elektrischen Heizwiderstandes unabhängig von dem Abgasstrom des Verbrennungsmotors aufgeheizt werden, dabei ist ein Beheizen des elektrischen Heizelements auch dann möglich, wenn der Verbrennungsmotor ausgeschaltet ist, insbesondere unmittelbar vor einem Start des Verbrennungsmotors. Durch das metallische Trägerelement ist eine besonders gute Wärmeübertragung möglich, sodass die im elektrischen Heizelement erzeugte Wärme ohne größere Verluste auf das metallische Trägerelement übertragen werden kann. Zudem erlaubt eine metallische Trägerstruktur eine entsprechend dünnwandige Ausführung des elektrisch beheizbaren Drei-Wege-Katalysators, wodurch der Strömungswiderstand und somit der Abgasgegendruck reduziert werden kann.

Besonders bevorzugt ist dabei, wenn das elektrische Heizelement mittels einer Stiftverbindung an der metallischen Trägerstruktur des elektrisch beheizbaren Drei-Wege-Katalysators befestigt ist. Durch eine Stiftverbindung kann eine stabile Lagerung der Heizscheibe an der metallischen Trägerstruktur des elektrisch beheizbaren Drei-Wege-Katalysators realisiert werden, sodass die mechanische Festigkeit des elektrisch beheizbaren Drei-Wege-Katalysators und Vibrationen durch eine schwingende, lockere Heizscheibe vermieden werden.

Alternativ ist in einer vorteilhaften Ausführungsvariante der Erfindung vorgesehen, dass der elektrisch beheizbare Drei-Wege-Katalysator ein direkt elektrisch beheizbares Substrat aufweist. Durch ein direkt elektrisch beheizbares Substrat wird die Wärme unmittelbar im Substrat erzeugt, sodass das Substrat, insbesondere nach einem Kaltstart des Verbrennungsmotors, ohne einen weiteren Wärmeübergang der Heizscheibe auf das Abgas und vom Abgas auf den Katalysator aufgeheizt werden kann.

Gemäß einer bevorzugten Ausführungsform der Erfindung ist vorgesehen, dass stromaufwärts des Partikelfilters eine erste Lambdasonde und stromabwärts des elektrisch beheizbaren Katalysators und stromaufwärts des weiteren Drei-Wege-Katalysators eine zweite Lambdasonde im Abgaskanal angeordnet sind. Dadurch kann mit einem Lambdasondenpaar sowohl die Lambdaregelung des Verbrennungsmotors als auch die On-Board-Diagnose des elektrisch beheizbaren Drei-Wege-Katalysators erfolgen, da der unbeschichtete Partikelfilter die Lambdaregelung nicht beeinflusst. Dabei ist die erste Lambdasonde vorzugsweise als Breitbandlambdasonde ausgeführt, um eine quantitative Aussage über den Sauerstoffgehalt im Abgas zu ermöglichen. Die zweite Lambdasonde kann als Sprung-Lambdasonde ausgeführt werden, um die Kosten zu reduzieren und somit eine qualitative Aussage über einen Sauerstoffüberschuss im Abgas zu liefern.

Gemäß einer vorteilhaften Ausführungsform der Erfindung ist vorgesehen, dass der Partikelfilter unbeschichtet und frei von einem Sauerstoffspeicher ausgeführt ist. Dabei fehlt dem Partikelfilter sowohl eine Drei-Wege-katalytische Beschichtung als auch eine Beschichtung zur selektiven, katalytischen Reduktion von Stickoxiden. Besonders bevorzugt ist dabei, wenn der Partikelfilter im Wesentlichen frei von einem Sauerstoffspeicher ausgeführt ist und keine Sauerstoffspeicherfähigkeit aufweist. Dadurch kann eine alterungsbedingte Veränderung der Eigenschaften des Partikelfilters verhindert werden, sodass der Partikelfilter über seine Lebenszeit ein im Wesentlichen gleiches Verhalten aufweist. Zudem kann auf diese Weise die Funktion des Partikelfilters und des elektrisch beheizbaren Drei-Wege-Katalysators durch ein gemeinsames Lambdasondenpaar überwacht werden, wobei die erste Lambdasonde stromaufwärts des Partikelfilters und die zweite Lambdasonde stromabwärts des elektrisch beheizbaren Drei-Wege-Katalysators angeordnet ist. Da der Partikelfilter als erste Abgasnachbehandlungskomponente nach dem Auslass des Verbrennungsmotors angeordnet ist, wird der Partikelfilter insbesondere bei einem Volllastbetrieb des Verbrennungsmotors mit hohen Abgastemperaturen beaufschlagt, welche ansonsten zu einer verstärkten thermischen Alterung einer katalytischen Beschichtung führen. Zudem kann durch den Verzicht auf eine Beschichtung der Partikelfilter mit weniger Zellen ausgeführt werden, wodurch die thermische Masse des Partikelfilters reduziert wird und ein Aufheizen des Partikelfilters begünstigt wird. Zudem wird zusätzlich der Abgasgegendruck reduziert, wodurch die Strömungsverluste in der Abgasanlage reduziert werden können und somit der Wirkungsgrad des Verbrennungsmotors gesteigert werden kann. Dies kann bei ansonsten unveränderten Rahmenbedingungen zu mehr Leistung oder einem verringerten Verbrauch genutzt werden.

Erfindungsgemäß wird ein Verfahren zur Abgasnachbehandlung eines Verbrennungsmotors mit einem erfindungsgemäßen Abgasnachbehandlungssystem vorgeschlagen, umfassend folgende Schritte:
- Elektrisches Beheizen des elektrisch beheizbaren Drei-Wege-Katalysators auf eine Light-Off-Temperatur des elektrisch beheizbaren Drei-Wege-Katalysators ab einem Motorstart des Verbrennungsmotors,
- Beheizen des Partikelfilters, des elektrisch beheizbaren Drei-Wege-Katalysators und des weiteren Drei-Wege-Katalysators mit dem Abgasstrom des Verbrennungsmotors ab dem Start des Verbrennungsmotors, und
- Regeneration des Partikelfilters, wobei der Partikelfilter durch das Abgas des Verbrennungsmotors auf eine Regenerationstemperatur aufgeheizt wird.

Durch ein erfindungsgemäßes Verfahren kann zumindest eine schadstoffmindernde Abgasnachbehandlungskomponente, insbesondere der elektrisch beheizbare Drei-Wege-Katalysator zeitnah nach einem Kaltstart des Verbrennungsmotors auf eine Light-Off-Temperatur aufgeheizt werden, wodurch eine effiziente Konvertierung der schädlichen gasförmigen Abgaskomponenten möglich ist. Zudem kann die Alterungsbeständigkeit der katalytischen Beschichtung erhöht werden, da der elektrisch beheizbare Drei-Wege-Katalysator in einem Volllastbetrieb des Verbrennungsmotors nicht so heiß wird wie der in erster Position nach dem Auslass angeordnete Partikelfilter.

In einer bevorzugten Ausführungsform des Verfahrens zur Abgasnachbehandlung ist vorgesehen, dass in einer Heizphase eines der Drei-Wege-Katalysatoren oder des Partikelfilters Sekundärluft in den auslassseitigen Zylinderkopf oder in den Abgaskanal stromabwärts des Auslasses und stromaufwärts des Partikelfilters eingebracht wird, um das Aufheizen der Katalysatoren oder des Partikelfilters durch eine exotherme Umsetzung von unverbrannten Kraftstoffkomponenten zu unterstützen. Durch das Einblasen von Sekundärluft kann die Wärmeübertragung von dem elektrischen Heizelement des elektrisch beheizbaren Drei-Wege-Katalysators auf das Trägerelement verbessert werden, zudem wird verhindert, dass es durch das elektrische Heizelement lokal zu einer Überhitzung kommt, da die entstehende Wärme konvektiv durch die Sekundärluft auf den restliche Katalysator übertragen wird.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Gleiche Bauteile oder Bauteile mit gleicher Funktion sind dabei in den unterschiedlichen Figuren mit gleichen Bezugszeichen gekennzeichnet. Es zeigen:
- Figur 1: eine erstes Ausführungsbeispiel eines Verbrennungsmotors mit einem erfindungsgemäßen Abgasnachbehandlungssystem;
- Figur 2: ein weiteres Ausführungsbeispiel eines Verbrennungsmotors mit einem erfindungsgemäßen Abgasnachbehandlungssystem, wobei das Abgasnachbehandlungssystem zusätzlich ein Sekundärluftsystem zur Einbringung von Frischluft in die Abgasanlage aufweist; und
- Figur 3: ein Diagramm, in welchem der Temperaturverlauf in der Abgasanlage bei der Durchführung eines erfindungsgemäßen Verfahrens zur Abgasnachbehandlung dargestellt ist.

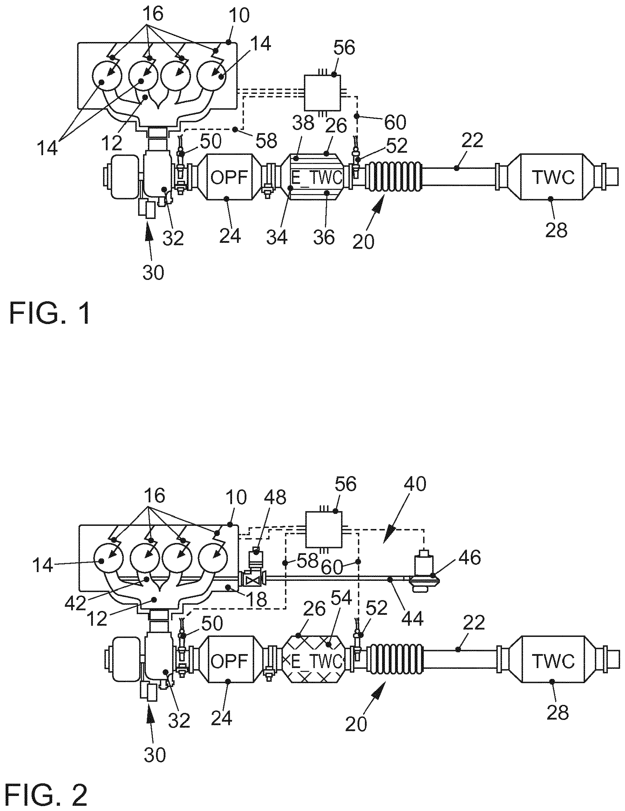

Figur 1 zeigt eine schematische Darstellung eines Verbrennungsmotors 10, dessen Auslass 12 mit einer Abgasanlage 20 verbunden ist. Der Verbrennungsmotor 10 ist als Ottomotor ausgeführt, welcher mittels Zündkerzen 16 fremdgezündet wird und weist mehrere Brennräume 14 auf. Der Verbrennungsmotor 10 ist vorzugsweise als mittels eines Abgasturboladers 30 aufgeladener Verbrennungsmotor 10 ausgeführt, wobei eine Turbine 32 des Abgasturboladers 30 stromabwärts des Auslasses 12 und stromaufwärts der ersten emissionsmindernden Abgasnachbehandlungskomponente, insbesondere stromaufwärts eines Partikelfilters 24 angeordnet ist. Die Abgasanlage 20 umfasst einen Abgaskanal 22, in dem in Strömungsrichtung eines Abgases durch den Abgaskanal 22 ein Partikelfilter 24, stromabwärts des Partikelfilters 24 ein elektrisch beheizbarer Drei-Wege-Katalysator 26, und weiter stromabwärts ein weiterer Drei-Wege-Katalysator 28 angeordnet sind. Der Partikelfilter 24 und der elektrisch beheizbare Drei-Wege-Katalysator 26 sind dabei vorzugsweise jeweils motornah, das heißt mit einem Abstand von weniger als 80 cm Abgaslauflänge, insbesondere von weniger als 50 cm Abgaslauflänge, ab dem Auslass 12 des Verbrennungsmotors 10 angeordnet. Der weitere Drei-Wege-Katalysator 28 ist vorzugsweise in Unterbodenlage eines Kraftfahrzeuges und somit in einer motorfernen Position, das heißt mit einem Abstand von mehr 100 cm Abgaslauflänge ab dem Auslass 12 des Verbrennungsmotors, angeordnet.

In der Abgasanlage 20 können zusätzlich weitere Katalysatoren, insbesondere ein weiterer Drei-Wege-Katalysator, ein NOx-Speicherkatalysator oder ein Katalysator zur selektiven katalytischen Reduktion von Stickoxiden angeordnet sein. Stromaufwärts des Partikelfilters 24 ist im Abgaskanal 22 eine erste Lambdasonde 50 angeordnet, mit welcher der Sauerstoffgehalt λ₁ des Abgases stromabwärts des Auslasses 12 und stromaufwärts der ersten Abgasnachbehandlungskomponente, also des Partikelfilters 24, ermittelt werden kann. Stromabwärts des elektrisch beheizbaren Drei-Wege-Katalysators 26 und stromaufwärts des weiteren Drei-Wege-Katalysators 28 ist im Abgaskanal 22 eine zweite Lambdasonde 52 angeordnet, mit welcher der Sauerstoffgehalt λ₂ im Abgaskanal 28 stromabwärts des elektrisch beheizbaren Drei-Wege-Katalysators 26 und stromaufwärts des weiteren Drei-Wege-Katalysators 28 ermittelt werden kann. Die erste Lambdasonde 50 ist vorzugsweise als Breitband-Lambdasonde aufgeführt und über eine erste Signalleitung 58 mit einem Steuergerät 56 des Verbrennungsmotors 10 verbunden. Die zweite Lambdasonde 52 ist vorzugsweise als Sprungsonde ausgeführt und über eine zweite Signalleitung 60 mit dem Steuergerät 56 verbunden. Die erste Lambdasonde 50 und die zweite Lambdasonde 52 bilden dabei eine Sensoranordnung aus, mit welcher das Verbrennungsluftverhältnis λ des Verbrennungsmotors 10 geregelt werden kann. Zusätzlich kann über die Sensoranordnung eine On-Board-Diagnose des elektrisch beheizbaren Katalysators 26 erfolgen.

Der elektrisch beheizbare Drei-Wege-Katalysator 26 weist ein elektrisches Heizelement 34, insbesondere eine elektrisch Heizscheibe sowie eine metallische Trägerstruktur 36 auf. Das elektrische Heizelement 34 ist mittels einer Stiftverbindung 38 mit der metallischen Trägerstruktur verbunden, wodurch eine feste mechanische Fixierung des elektrischen Heizelements 34 möglich ist. Alternativ kann der elektrisch beheizbare Drei-Wege-Katalysator 26 wie in Figur 2 dargestellt auch ein elektrisch beheizbares Substrat 54 aufweisen. Ferner sind stromaufwärts und stromabwärts des Partikelfilters 24 Drucksensoren vorgesehen, mit welchen eine Differenzdruckmessung über den Partikelfilter 24 zur Ermittlung des Beladungszustands des Partikelfilters 24 durchgeführt werden kann. Zudem kann über die Drucksensoren eine On-Board-Diagnose des Partikelfilters 24 erfolgen.

In Figur 2 ist ein weiteres Ausführungsbeispiel eines Verbrennungsmotors mit einem Abgasnachbehandlungssystem dargestellt. Bei im Wesentlichen gleichem Aufbau wie zu Figur 1 ausgeführt, weist das Abgasnachbehandlungssystem zusätzlich ein Sekundärluftsystem 40 auf. Das Sekundärluftsystem 40 umfasst eine Sekundärluftpumpe 46, eine Sekundärluftleitung 44 sowie ein in der Sekundärluftleitung 44 stromabwärts der Sekundärluftpumpe 46 und stromaufwärts einer Einleitstelle 42 angeordnetes Sekundärluftventil 48. Die Einleitstelle 42 ist in einem auslassseitigen Zylinderkopf 18 des Verbrennungsmotors 10 ausgebildet, um die Sekundärluft in ein möglichst heißes Abgas einbringen zu können und somit exotherme Reaktionen mit unverbrannten Kraftstoffkomponenten zu begünstigen. Alternativ kann die Einleitstelle 42 auch an Stellen stromaufwärts des Partikelfilter 24 ausgebildet sein, sodass der Partikelfilter 24 und die stromabwärts des Partikelfilters 24 angeordneten Drei-Wege-Katalysatoren 26, 28 mit Sekundärluft versorgt werden können. Der elektrisch beheizbare Drei-Wege-Katalysator 26 weist ein elektrisch beheizbares Substrat auf, mit welchem Wärme unmittelbar an der katalytisch wirksamen Struktur des elektrisch beheizbaren Katalysators 26 erzeugt werden kann. Alternativ kann der elektrisch beheizbare Katalysator 26 auch wie in Figur 1 dargestellt ein elektrisches Heizelement 34 und eine metallische Trägerstruktur 36 aufweisen.

Im Betrieb des Verbrennungsmotors 10 wird das Abgas des Verbrennungsmotors durch den Partikelfilter 24, den elektrisch beheizbaren Drei-Wege-Katalysator 26 sowie den weiteren Drei-Wege-Katalysator 28 geleitet, wobei die im Abgas enthaltenen Rußpartikel aus dem Abgasstrom herausgefiltert werden und die schädlichen Abgaskomponenten in unschädliche Abgaskomponenten konvertiert werden. Durch die motornahe Anordnung des Partikelfilters 24 und des elektrisch beheizbaren Drei-Wege-Katalysators 26 ist nach einem Kaltstart des Verbrennungsmotors 10 eine besonders schnelle Aufheizung auf eine Light-Off-Temperatur möglich, um möglichst schnell nach dem Kaltstart eine effiziente Konvertierung der gasförmigen Schadstoffe zu ermöglichen. Dabei ist der Partikelfilter 24 vorzugsweise unbeschichtet, insbesondere ohne eine Beschichtung mit einer Sauerstoffspeicherfähigkeit, ausgeführt. Dadurch ist eine Diagnose des elektrisch beheizbaren Katalysators 26 über die Lambdasonden 50, 52 möglich. Durch die Anordnung des Partikelfilters 24 als erste Komponente der Abgasnachbehandlung wird bei einem Volllastbetrieb des Verbrennungsmotors 10 der elektrisch beheizbare Katalysator 26 nicht so stark belastet, sodass die Alterung der katalytischen Beschichtung reduziert werden kann.

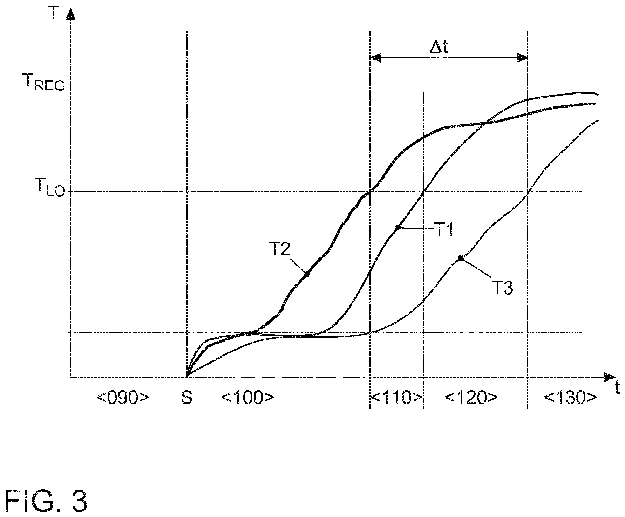

In Figur 3 ist der Temperaturverlauf an mehreren Stellen der Abgasanlage 20 beim Ablauf eines erfindungsgemäßen Verfahrens zur Abgasnachbehandlung dargestellt. Dabei ist in einer ersten Kurve I die Temperatur T1 unmittelbar stromabwärts des Partikelfilters 24 dargestellt. In der zweiten Kurve II ist die Temperatur T2 im elektrisch beheizbaren Drei-Wege-Katalysator 26 bei aktiviertem elektrischem Heizelement 34 dargestellt. Die Temperatur T2 wird dazu an der Bauteilmitte des elektrisch beheizbaren Drei-Wege-Katalysators 26 ermittelt. Dabei wird der Verbrennungsmotor 10 an einem Startzeitpunkt S gestartet und gleichzeitig das elektrische Heizen des elektrischen Heizelements 34 gestartet. In einer ersten Phase <100> werden der Partikelfilter 24 und der elektrisch beheizbare Katalysator 26 vom Abgas des Verbrennungsmotors 10 durchströmt und durch das Abgas aufgeheizt. Parallel wird der elektrisch beheizbare Katalysator 26 durch das elektrische Heizelement 34 aufgeheizt, wobei die Wärme von dem Heizelement 34 im Wesentlichen konvektiv durch den Abgasstrom des Verbrennungsmotors 10 auf die metallische Trägerstruktur 36 übertragen wird. Hat der elektrisch beheizbare Katalysator 26 seine Light-Off-Temperatur T_{LO} erreicht, erfolgt in einer zweiten Phase <110> ein kombiniertes Beheizen des elektrisch beheizbaren Drei-Wege-Katalysators 26 aus einem elektrischen Beheizen und einem chemischen Beheizen, da ab diesem Zeitpunkt die unverbrannten Abgaskomponenten exotherm an der katalytischen Oberfläche des elektrisch beheizbaren Drei-Wege-Katalysators 26 umgesetzt werden können. Hat der elektrisch beheizbare Drei-Wege-Katalysator 26 seine Betriebstemperatur erreicht, so wird das elektrische Heizelement 34 abgeschaltet. In einer dritten Phase <120> wird das elektrische Beheizen des elektrisch beheizbaren Drei-Wege-Katalysators 26 eingestellt und die Temperatur durch die exothermen Reaktionen der unverbrannten Kraftstoffkomponenten an der katalytisch wirksamen Oberfläche des elektrisch beheizbaren Drei-Wege-Katalysators 26 gehalten. In einer vierten Betriebsphase <130> haben dann sowohl der elektrisch beheizbare Drei-Wege-Katalysator 26 als auch der Partikelfilter 24 eine Temperatur erreicht, bei der keine weiteren Heizmaßnahmen mehr notwendig sind. In der dritten Kurve ist zum Vergleich die Temperatur T3 des elektrisch beheizbaren Drei-Wege-Katalysators 26 dargestellt, wenn das elektrische Heizelement 34 in keiner der Phasen <100>, <110> und <120> aktiviert ist.

Durch ein Sekundärluftsystem 40 kann ein Trägerstrom zur Wärmeübertragung erzeugt werden, wodurch bereits in einer Vorstartphase <90> mit dem Aufheizen des elektrisch beheizbaren Drei-Wege-Katalysators 24 begonnen werden kann, sodass die Light-Off-Temperatur T_{LO} noch kürzer nach dem Start S des Verbrennungsmotors 10 erreicht wird.

### Bezugszeichenliste

- 10: Verbrennungsmotor
- 12: Auslass
- 14: Brennraum
- 16: Zündkerze
- 18: Zylinderkopf

- 20: Abgasanlage
- 22: Abgaskanal
- 24: Partikelfilter
- 26: elektrisch beheizbarer Drei-Wege-Katalysator
- 28: Drei-Wege-Katalysator

- 30: Abgasturbolader
- 32: Turbine
- 34: elektrisches Heizelement / elektrische Heizscheibe
- 36: metallische Trägerstruktur
- 38: Stiftverbindung

- 40: Sekundärluftsystem
- 42: Einleitstelle
- 44: Sekundärluftleitung
- 46: Sekundärluftpumpe
- 48: Sekundärluftventil

- 50: erste Lambdasonde / Breitbandsonde
- 52: zweite Lambdasonde / Sprungsonde
- 54: elektrisch beheizbares Substrat
- 56: Steuergerät
- 58: Signalleitung
- 60: Signalleitung
- <90>: Vorstartphase
- <100>: Startphase des Verbrennungsmotors
- <110>: zweite Phase
- <120>: dritte Phase
- <130>: vierte Phase

- S: Start des Verbrennungsmotors
- T: Temperatur
- T1: Temperatur
- T2: Temperatur am elektrisch beheizbaren Drei-Wege-Katalysator bei aktivem Heizelement
- T3: Temperatur am elektrisch beheizbaren Drei-Wege-Katalysator bei deaktiviertem Heizelement

- T_{LO}: Light-Off-Temperatur des elektrisch beheizbaren Katalysators
- T_{REG}: Regenerationstemperatur des Partikelfilters

## Patentansprüche

1. Abgasnachbehandlungssystem für einen Verbrennungsmotor (10), mit einer Abgasanlage (20), welche mit einem Auslass (12) des Verbrennungsmotors (10) verbindbar ist, wobei die Abgasanlage (20) einen Abgaskanal (22) umfasst, in dem in Strömungsrichtung eines Abgases des Verbrennungsmotors (10) durch den Abgaskanal (22) als erste emissionsmindernde Komponente motornah ein Partikelfilter (24) angeordnet ist, **dadurch gekennzeichnet, dass** stromabwärts des Partikelfilters (24) ebenfalls in einer motornahen Position ein elektrisch beheizbarer Drei-Wege-Katalysator (26) und stromabwärts des elektrisch beheizbaren Katalysators (26) ein weiterer Drei-Wege-Katalysator (28) angeordnet sind.

2. Abgasnachbehandlungssystem nach Anspruch 1, **dadurch gekennzeichnet, dass** in dem Abgaskanal (22) stromabwärts des Auslasses (12) und stromaufwärts des Partikelfilters (24) eine Turbine (32) eines Abgasturboladers (30) angeordnet ist.

3. Abgasnachbehandlungssystem nach Anspruch 1 oder Anspruch 2, **dadurch gekennzeichnet, dass** der Verbrennungsmotor (10) ein Sekundärluftsystem (40) zur Einbringung von Sekundärluft in den Abgaskanal (22) aufweist, wobei eine Einleitstelle (42) des Sekundärluftsystems (40) an dem Auslass (12) des Verbrennungsmotors (10) oder stromabwärts des Auslasses (12) und stromaufwärts des Partikelfilters (24) angeordnet ist.

4. Abgasnachbehandlungssystem nach einem der Ansprüche 1 bis 3, **dadurch gekennzeichnet, dass** der elektrisch beheizbare Drei-Wege-Katalysator (26) ein elektrisches Heizelement (34) und eine metallische Trägerstruktur (36) aufweist.

5. Abgasnachbehandlungssystem nach Anspruch 4, **dadurch gekennzeichnet, dass** die Heizelement (34) mittels einer Stiftverbindung (38) an der metallischen Trägerstruktur des elektrisch beheizbaren Drei-Wege-Katalysators (26) befestigt ist.

6. Abgasnachbehandlungssystem nach einem der Ansprüche 1 bis 3, **dadurch gekennzeichnet, dass** der elektrisch beheizbare Drei-Wege-Katalysator (26) ein elektrisch direkt beheizbares Substrat (54) aufweist

7. Abgasnachbehandlungssystem nach einem der Ansprüche 1 bis 6, **dadurch gekennzeichnet, dass** stromaufwärts des Partikelfilters (24) eine erste Lambdasonde (50) und stromabwärts des elektrisch beheizbaren Katalysators (26) und stromaufwärts des weiteren Drei-Wege-Katalysators (28) eine zweite Lambdasonde (52) im Abgaskanal (22) angeordnet sind.

8. Abgasnachbehandlungssystem nach einem der Ansprüche 1 bis 7, **dadurch gekennzeichnet, dass** der Partikelfilter (24) unbeschichtet und frei von einem Sauerstoffspeicher ausgeführt ist.

9. Verfahren zur Abgasnachbehandlung eines Verbrennungsmotors (10) mit einem Abgasnachbehandlungssystem nach einem der Ansprüche 1 bis 8, umfassend folgende Schritte:
- Elektrisches Beheizen des elektrisch beheizbaren Drei-Wege-Katalysators (26) auf eine Light-Off-Temperatur (T_{LO}) des elektrisch beheizbaren Drei-Wege-Katalysators (26) an einem Motorstart des Verbrennungsmotors (10),
- Beheizen des Partikelfilters (24), des elektrisch beheizbaren Drei-Wege-Katalysators (26) und des weiteren Drei-Wege-Katalysators (28) mit dem Abgasstrom des Verbrennungsmotors (10) ab dem Start des Verbrennungsmotors (10).

10. Verfahren zur Abgasnachbehandlung nach Anspruch 9, **dadurch gekennzeichnet, dass** in einer Heizphase eines der Drei-Wege-Katalysatoren (26, 28) oder des Partikelfilters (24) Sekundärluft in den auslassseitigen Zylinderkopf (18) oder in den Abgaskanal (22) stromabwärts des Auslasses (12) und stromaufwärts des Partikelfilters (24) eingebracht wird, um das Aufheizen der Katalysatoren (26, 28) oder des Partikelfilters (24) durch eine exotherme Umsetzung von unverbrannten Kraftstoffkomponenten zu unterstützen.

## Claims

1. Exhaust gas aftertreatment system for an internal combustion engine (10), comprising an exhaust system (20) capable of being connected to an outlet (12) of the internal combustion engine (10), wherein the exhaust system (20) comprises an exhaust gas duct (22), in which as a first emission-reducing component a particulate filter (24) is arranged close to the engine in the flow direction of an exhaust gas of the internal combustion engine (10) through the exhaust gas duct (22), **characterized in that,** likewise in a position close to the engine, an electrically heatable three-way catalytic converter (26) is arranged downstream of the particulate filter (24), and a further three-way catalytic converter (28) is arranged downstream of the electrically heatable catalytic converter (26).

2. Exhaust gas aftertreatment system according to Claim 1, **characterized in that** a turbine (32) of an exhaust gas turbocharger (30) is arranged in the exhaust gas duct (22) downstream of the outlet (12) and upstream of the particulate filter (24).

3. Exhaust gas aftertreatment system according to Claim 1 or Claim 2, **characterized in that** the internal combustion engine (10) comprises a secondary air system (40) for introducing secondary air into the exhaust gas duct (22), wherein an introduction point (42) of the secondary air system (40) is arranged at the outlet (12) of the internal combustion engine (10) or downstream of the outlet (12) and upstream of the particulate filter (24).

4. Exhaust gas aftertreatment system according to any one of Claims 1 to 3, **characterized in that** the electrically heatable three-way catalytic converter (26) has an electric heating element (34) and a metal supporting structure (36).

5. Exhaust gas aftertreatment system according to Claim 4, **characterized in that** the heating element (34) is attached to the metal supporting structure of the electrically heatable three-way catalytic converter (26) by means of a pin connection (38).

6. Exhaust gas aftertreatment system according to any one of Claims 1 to 3, **characterized in that** the electrically heatable three-way catalytic converter (26) has an electrically directly heatable substrate (54).

7. Exhaust gas aftertreatment system according to any one of Claims 1 to 6, **characterized in that** a first lambda probe (50) is arranged in the exhaust gas duct (22) upstream of the particulate filter (24) and a second lambda probe (52) is arranged in the exhaust gas duct (22) downstream of the electrically heatable catalytic converter (26) and upstream of the further three-way catalytic converter (28).

8. Exhaust gas aftertreatment system according to any one of Claims 1 to 7, **characterized in that** the particulate filter (24) is uncoated and free of an oxygen accumulator.

9. Method for the exhaust gas aftertreatment of an internal combustion engine (10) with an exhaust gas aftertreatment system according to any one of Claims 1 to 8, comprising the following steps:
- electrically heating the electrically heatable three-way catalytic converter (26) to a light-off temperature (T_{LO}) of the electrically heatable three-way catalytic converter (26) at an engine start of the internal combustion engine (10),
- heating the particulate filter (24), the electrically heatable three-way catalytic converter (26) and the further three-way catalytic converter (28) with the exhaust gas stream of the internal combustion engine (10) starting from the start of the internal combustion engine (10).

10. Method for exhaust gas aftertreatment according to Claim 9, **characterized in that** in a heating phase of one of the three-way catalytic converters (26, 28) or of the particulate filter (24), secondary air is introduced into the outlet-side cylinder head (18) or into the exhaust gas duct (22) downstream of the outlet (12) and upstream of the particulate filter (24) in order to support the heating of the catalytic converters (26, 28) or of the particulate filter (24) by means of an exothermic reaction of unburned fuel components.

## Revendications

1. Système de post-traitement des gaz d'échappement pour un moteur à combustion interne (10), comprenant une installation de gaz d'échappement (20), laquelle peut être raccordée à une sortie (12) du moteur à combustion interne (10), dans lequel l'installation de gaz d'échappement (20) comporte un canal de gaz d'échappement (22), dans lequel dans la direction d'écoulement d'un gaz d'échappement du moteur à combustion interne (10) à travers le canal de gaz d'échappement (22), un filtre à particules (24) est disposé à proximité du moteur en tant que premier composant de réduction d'émissions, **caractérisé en ce que,** en aval du filtre à particules (24), dans une position également proche du moteur, un catalyseur à trois voies (26) pouvant être chauffé électriquement est disposé, et, en aval du catalyseur (26) pouvant être chauffé électriquement, un autre catalyseur à trois voies (28) est disposé.

2. Système de post-traitement des gaz d'échappement selon la revendication 1, **caractérisé en ce que,** dans le canal de gaz d'échappement (22), en aval de la sortie (12) et en amont du filtre à particules (24), une turbine (32) d'un turbocompresseur à gaz d'échappement (30) est disposée.

3. Système de post-traitement des gaz d'échappement selon la revendication 1 ou la revendication 2, **caractérisé en ce que** le moteur à combustion interne (10) comporte un système d'air secondaire (40) pour amener l'air secondaire dans le canal de gaz d'échappement (22), dans lequel un point d'introduction (42) du système d'air secondaire (40) est disposé à la sortie (12) du moteur à combustion interne (10) ou en aval de la sortie (12) et en amont du filtre à particules (24).

4. Système de post-traitement des gaz d'échappement selon l'une quelconque des revendications 1 à 3, **caractérisé en ce que** le catalyseur à trois voies (26) pouvant être chauffé électriquement comporte un élément chauffant (34) électrique et une structure porteuse (36) métallique.

5. Système de post-traitement des gaz d'échappement selon la revendication 4, **caractérisé en ce que** l'élément chauffant (34) est fixé au moyen d'un raccord à goupille (38) à la structure porteuse métallique du catalyseur à trois voies (26) pouvant être chauffé électriquement.

6. Système de post-traitement des gaz d'échappement selon l'une quelconque des revendications 1 à 3, **caractérisé en ce que** le catalyseur à trois voies (26) pouvant être chauffé électriquement comporte un substrat (54) pouvant être directement chauffé électriquement.

7. Système de post-traitement des gaz d'échappement selon l'une quelconque des revendications 1 à 6, **caractérisé en ce que,** en amont du filtre à particules (24), une première sonde lambda (50) est disposée et, en aval du catalyseur (26) pouvant être chauffé électriquement, et en amont de l'autre catalyseur à trois voies (28), une seconde sonde lambda (52) est disposée dans le canal de gaz d'échappement (22).

8. Système de post-traitement des gaz d'échappement selon l'une quelconque des revendications 1 à 7, **caractérisé en ce que** le filtre à particules (24) est réalisé sans revêtement et exempt d'un accumulateur d'oxygène.

9. Procédé de post-traitement des gaz d'échappement d'un moteur à combustion interne (10) comprenant un système de post-traitement des gaz d'échappement selon l'une quelconque des revendications 1 à 8, comprenant les étapes suivantes :
- le chauffage électrique du catalyseur à trois voies (26) pouvant être chauffé électriquement à une température Light-Off (T_{LO}) du catalyseur à trois voies (26) pouvant être chauffé électriquement lors d'un démarrage de moteur du moteur à combustion interne (10),
- le chauffage du filtre à particules (24), du catalyseur à trois voies (26) pouvant être chauffé électriquement et de l'autre catalyseur à trois voies (28) au moyen de l'écoulement de gaz d'échappement du moteur à combustion interne (10) à partir du démarrage du moteur à combustion interne (10).

10. Procédé de post-traitement des gaz d'échappement selon la revendication 9, **caractérisée en ce que,** dans une phase de chauffage de l'un des catalyseurs à trois voies (26, 28) ou du filtre à particules (24), l'air secondaire est introduit dans une tête de cylindre (18) côté sortie ou dans le canal de gaz d'échappement (22) en aval de la sortie (12) et en amont du filtre à particules (24), pour supporter le chauffage des catalyseurs (26, 28) ou du filtre à particules (24) par réaction exothermique des composants de carburant non brûlés.
